# EUROPÄISCHE PATENTSCHRIFT

(11) **EP 2 123 930 B1**
(45) Veröffentlichungstag und Bekanntmachung des Hinweises auf die Patenterteilung: **21.09.2011**
(21) Anmeldenummer: 08008951.9
(22) Anmeldetag: 14.05.2008
(51) Int. Cl.: F16D 35/02

(54) **Vorrichtung zum Antrieb von zeitlich nacheinander aktivierbaren Aggregaten**
Device for powering machines activated in succession
Dispositif d'entraînement d'agrégats pouvant être activés l'un après l'autre dans le temps

(43) Veröffentlichungstag der Anmeldung: 25.11.2009
(73) Patentinhaber: BorgWarner, Inc., Auburn Hills, MI 48326-2872 (US)
(72) Erfinder: Tilly, Christian, 88690 Uhldingen (DE)
(74) Vertreter: Schmitz, Hans-Werner

(56) Entgegenhaltungen:
- DE-A1- 19 749 342
- US-A- 3 444 748
- US-A1- 2006 042 902

## Beschreibung

Die Erfindung betrifft eine Vorrichtung zum Antrieb von zeitlich nacheinander aktivierbaren Aggregaten gemäß dem Oberbegriff des Anspruches 1. Eine gattungsgemäße Vorrichtung ist aus US-A-2006/042902 bekannt.

Der Aufbau und die Funktionsweise bisher bekannter derartiger Vorrichtungen ist insofern aufwendig, als für die Zuschaltung des zeitlich später zu aktivierenden Aggregats ein hoher Steuer- bzw. Regelaufwand mit entsprechenden Steuer- und Regelkomponenten getrieben werden muss.

Es ist daher Aufgabe der vorliegenden Erfindung, eine Vorrichtung zum Antrieb von zeitlich nacheinander aktivierbaren Aggregaten gemäß dem Oberbegriff des Anspruches 1 zu schaffen, die eine Verminderung des Steuer- bzw. Regelaufwandes für die Aktivierung des oder der zeitlich verzögert zuschaltbaren Aggregate ermöglicht.

Die Lösung dieser Aufgabe erfolgt durch die Merkmale des Anspruches 1.

Erfindungsgemäß wird zunächst das Prinzip einer Flüssigkeitsreibungskupplung genutzt, wie sie beispielsweise in der DE 197 49 342 A1 erläutert ist.

Dementsprechend weist die Flüssigkeitsreibungskupplung bzw. Visko-Kupplung eine Vorratskammer für ein Scherfluid, eine Arbeitskammer mit wenigstens einem Scherspalt und ein stillstehendes Staudruckelement auf, mit dem das Scherfluid von der Vorratskammer in die Arbeitskammer überführt werden kann.

Erfindungsgemäß weist die Flüssigkeitsreibungskupplung gegenüber dem Stand der Technik jedoch einen ersten Kupplungsabschnitt und einen zweiten Kupplungsabschnitt auf. Hierbei ist das erste Aggregat dem ersten Kupplungsabschnitt zugeordnet und der zweite Kupplungsabschnitt, der dem zweiten Aggregat zugeordnet ist, ist dem ersten Kupplungsabschnitt nachgeordnet und steht mit diesem in Fluidverbindung. Somit ist es möglich, zunächst das erste Aggregat durch Zuführen von Scherfluid in den ersten Kupplungsabschnitt zu betätigen, wonach das zweite Aggregat zwangsgesteuert und zeitlich der Einkupplung des ersten Aggregates nachgeschaltet mit der Antriebsvorrichtung der erfindungsgemäßen Vorrichtung verbunden werden kann.

Somit ist im Prinzip durch die fluidverbundenen Kupplungsabschnitte eine Steuerung allein durch einen Überlauf des Scherfluides vom ersten Kupplungsabschnitt zum zweiten Kupplungsabschnitt möglich, ohne dass neben ohnehin vorgesehenen Steuer- bzw. Regelkomponenten, wie einem Schaltventil und einem Aktuator, weiterer gerätetechnischer Regelaufwand getrieben werden muss.

Die Unteransprüche haben vorteilhafte Weiterbildungen der Erfindung zum Inhalt.

So ist es erfindungsgemäß möglich, den ersten und den zweiten Kupplungsabschnitt mit jeweils nur einem Scherspalt zu versehen.

Es ist jedoch auch möglich, beide Kupplungsabschnitte mit mehreren derartigen Scherspalten durch das Vorsehen entsprechender Arbeitskammern zu versehen, so dass pro Kupplungsabschnitt eine Steigerung des an das jeweilige Aggregat zu übertragenden Drehmomentes möglich ist.

Bei einer besonders bevorzugten Ausführungsform der Erfindung ist das erste Aggregat als Kühlmittelpumpe und das zweite Aggregat aus Lüfterrad einer Kfz-Kühleinrichtung ausgebildet. Bei dieser Ausführungsform ist es mit dem erfindungsgemäßen Prinzip möglich, zunächst das Pumpenrad mit der vollen Antriebsleistung anzutreiben und anschließend das Lüfterrad zeitlich verzögert zuzuschalten, um die Kühlleistung entsprechend erhöhen zu können, wenn allein der Betrieb des Pumpenrades zur Bereitstellung der nötigen Kühlleistung nicht mehr ausreichen würde.

Weitere Einzelheiten, Merkmale und Vorteile der Erfindung ergeben sich aus nachfolgender Beschreibung von Ausführungsbeispielen anhand der Zeichnung. Es zeigt:
- Fig. 1: eine schematisch stark vereinfachte Darstellung einer ersten möglichen Aus- führungsform der erfindungsgemäßen Vorrichtung, und
- Fig. 2: eine der Fig. 1 entsprechende Darstellung einer zweiten Ausführungsform.

Bei der erfindungsgemäßen Vorrichtung 1 handelt es sich im dargestellten Beispielsfall um einen Teil einer Kühleinrichtung für Verbrennungsmotoren handelt. Die Prinzipien vorliegender Erfindung werden nachfolgend an diesem Beispiel erläutert, wobei es selbstverständlich ist, dass bei allen Vorrichtungen zum Antrieb von zeitlich nacheinander aktivierbaren Aggregaten die erfindungsgemäßen Prinzipien zur Anwendung kommen können. Ferner wird in der Folge von zwei zeitlich nacheinander aktivierbaren Aggregaten die Rede sein, wobei hervorzuheben ist, dass auch dies nur ein Beispiel darstellt, da auch mehr als zwei Aggregate mit dem erfindungsgemäßen Funktionsbetrieb angetrieben werden können.

Die Vorrichtung bzw. Kühleinrichtung 1 weist dementsprechend ein erstes Aggregat in Form einer Kühlmittelpumpe 2 und ein zweites Aggregat in Form eines Lüfterrades 3 auf.

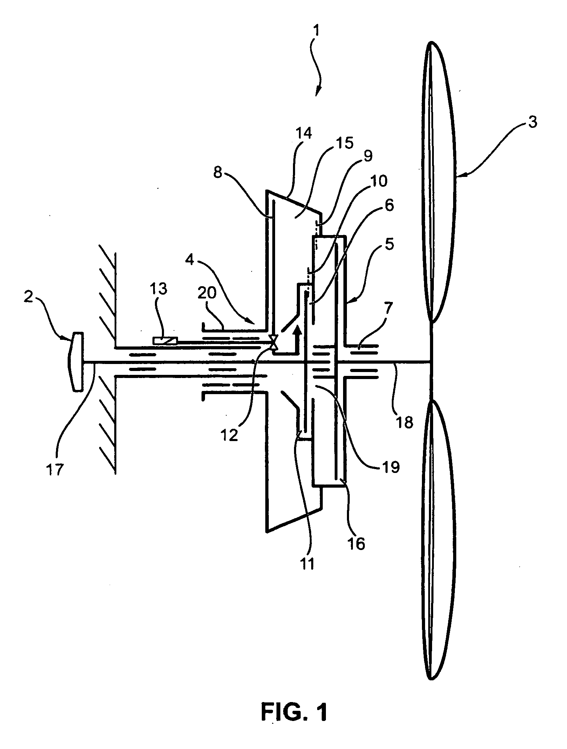

Ferner ist die Vorrichtung 1 mit einer Antriebsvorrichtung 4 versehen, die im Beispielsfall durch eine Riemenscheibe 20 symbolisiert wird. Die Antriebsvorrichtung 4 bzw. deren Riemenscheibe 20 wird von einem in der Fig. 1 nicht dargestellten Motor angetrieben, wobei die Antriebsverbindung zwischen dem Motor und der Riemenscheibe 20 über einen ebenfalls nicht dargestellten Riementrieb erfolgt. Alternative Ausbildungen für die Antriebsvorrichtung 4 sind selbstverständlich ebenfalls denkbar.

Ferner weist die Vorrichtung 1 eine Flüssigkeitsreibungskupplung 5 auf, die ein Gehäuse 14 mit einem radial außen liegenden Vorratsraum 15 und einen ersten Kupplungsabschnitt 6 sowie einen zweiten Kupplungsabschnitt 7 aufweist. Ferner ist ein stillstehendes Staudruckrohr 8 vorgesehen, das im Zusammenwirken mit einem über einen Aktuator 13 betätigbaren Schaltventil 12 Scherflüssigkeit vom Vorratsraum 15 in Arbeitsräume des ersten Kupplungsabschnittes 6 und des zweiten Kupplungsabschnittes 7 einleiten kann. Diese Arbeitsräume sind durch die Scherspalte 11 bzw. 16 symbolisiert, wobei der jeweilige Scherflüssigkeitsrücklauf durch die gestrichelten Linien 9 und 10 symbolisiert ist, die in den Vorratsraum 15 zurückführen.

Die erfindungsgemäße Vorrichtung 1 weist dementsprechend eine Flüssigkeitsreibungskupplung bzw. Visko-Kupplung 5 auf, die nach bekannten Wirkprinzipien funktioniert.

Hierbei ist das erste Aggregat bzw. die Kühlmittelpumpe 2, über eine Welle 17 mit dem ersten Kupplungsabschnitt 6 koppelbar, während das zweite Aggregat bzw. das Lüfterrad 3 über eine Welle 18 mit dem zweiten Führungsabschnitt 7 koppelbar ist.

Da die beiden Kupplungsabschnitte 6 und 7 in Strömungsverbindung stehen, wird zunächst bei Betätigung des Schaltventils 12 der erste Kupplungsabschnitt 6 mit Scherflüssigkeit versorgt, so dass es zu einer Drehmomentübertragung über die Welle 17 und damit zu einer Drehung der Kühlmittelpumpe 2 kommt. Wenn die Kühlmittelpumpe 2 ihre Maximalleistung erreicht hat, erfolgt ohne weiteren Regeleingriff durch einen Überlauf der Scherflüssigkeit vom ersten Kupplungsabschnitt 6 in den zweiten Kupplungsabschnitt 7 eine Aktivierung des Lüfterrades 3, da durch die Aktivierung des zweiten Kupplungsabschnittes 7 ein Drehmoment über die Welle 18 auf das Lüfterrad 3 übertragen wird, welches dadurch in Drehung versetzt wird.

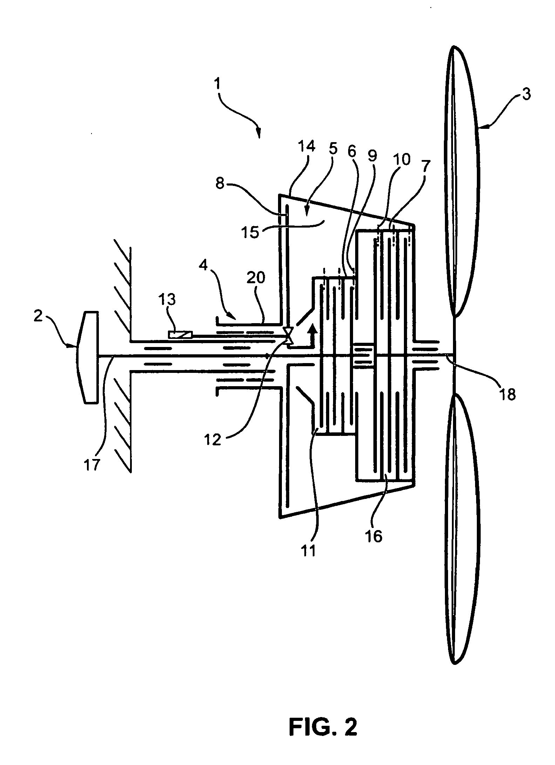

Vom Prinzip her folgt die Ausführungsform gemäß Fig. 2 dem gleichen Aufbau und dem gleichen Wirkprinzip, so dass bezüglich aller übereinstimmender Merkmale und Funktionen auf die Beschreibung der Fig. 1 verwiesen werden kann.

Wie die zeichnerische Darstellung der Fig. 2 verdeutlicht, unterscheidet sich diese Ausführungsform durch eine Mehrzahl von Arbeitsräumen bzw. Scherspalten 11 bzw. 16 des ersten Kupplungsabschnittes 6 bzw. zweiten Kupplungsabschnittes 7 von der Ausführungsform gemäß Fig. 1, die lediglich einen Scherspalt aufweist.

Die sich daraus ergebende hintereinander angeordnete Folge von Arbeitskammern ergibt die Möglichkeit, die Drehmomentübertragung je nachdem, wie viele Arbeitskammern bzw. Scherspalte mit Scherflüssigkeit versorgt werden, eine sukzessive Erhöhung des übertragenen Drehmoments auf das erste Aggregat 2 bzw. das zweite Aggregat 3 zu ermöglichen.

Neben der voranstehenden schriftlichen Offenbarung wird hiermit explizit auf deren zeichnerische Darstellung in den Fig. 1 und 2 zur Ergänzung der Offenbarung verwiesen.

### Bezugszeichenliste

- 1: Vorrichtung zum Antrieb von zeitlich nacheinander aktivierbaren Aggregaten
- 2: Erstes Aggregat (Kühlmittelpumpe)
- 3: Zweites Aggregat (Lüfterrad)
- 4: Antriebseinrichtung
- 5: Flüssigkeitsreibungskupplung
- 6: Erster Kupplungsabschnitt
- 7: Zweiter Kupplungsabschnitt
- 8: Staudruckrohr (stillstehend)
- 9, 10: Rücklauf für Scherflüssigkeit
- 11, 16: Scherspalt
- 12: Schaltventil
- 13: Aktuator des Schaltventils
- 14: Gehäuse
- 15: Vorratsraum
- 17, 18: Wellen
- 19: Überlauf vom ersten Kupplungsabschnitt 6 in den zweiten Kupplungsabschnitt 7
- 20: Riemenscheibe

## Patentansprüche

1. Vorrichtung (1) zum Antrieb von zeitlich nacheinander aktivierbaren Aggregaten
- mit einer Antriebsvorrichtung (4),
- mit einem ersten Aggregat (2),
- mit einem zweiten Aggregat (3), und
- mit einer Flüssigkeitsreibungskupplung (5),
**dadurch gekennzeichnet,**
- **dass** die Flüssigkeitsreibungskupplung (5) einen ersten Kupplungsabschnitt (6), der dem ersten Aggregat (2) zugeordnet ist, und einen zweiten Kupplungsabschnitt (7) aufweist, der dem ersten Kupplungsabschnitt (6) nachgeordnet ist und mit diesem in Fluidverbindung steht und über den das zweite Aggregat (3) mit der Antriebsvorrichtung (4) zwangsgesteuert und zeitlich der Einkopplung des ersten Aggregats (3) nachgeschaltet koppelbar ist.

2. Vorrichtung nach Anspruch 1, **dadurch gekennzeichnet, dass** die Kupplungsabschnitte (6, 7) über ein Schaltventil (12) regelbar sind.

3. Vorrichtung nach Anspruch 1 oder 2, **dadurch gekennzeichnet, dass** der erste Kupplungsabschnitt (6) und der zweite Kupplungsabschnitt (7) jeweils nur einen Scherspalt (11 bzw. 16) aufweisen.

4. Vorrichtung nach Anspruch 1 oder 2, **dadurch gekennzeichnet, dass** der erste Kupplungsabschnitt (6) und der zweite Kupplungsabschnitt (7) jeweils eine Mehrzahl von Scherspalten (11 bzw. 16) aufweisen, die jeweils nacheinander angeordnet sind und miteinander in Strömungsverbindung stehen.

5. Vorrichtung nach einem der Ansprüche 1 bis 4, **dadurch gekennzeichnet, dass** das erste Aggregat als Kühlmittelpumpe (2) einer Kühleinrichtung eines mit einem Verbrennungsmotor versehenen Kraftfahrzeugs ausgebildet ist.

6. Vorrichtung nach einem der Ansprüche 1 bis 5, **dadurch gekennzeichnet, dass** das zweite Aggregat (3) als Lüfterrad einer Kühleinrichtung eines mit einem Verbrennungsmotor versehenen Kraftfahrzeugs ausgebildet ist.

7. Vorrichtung nach einem der Ansprüche 1 bis 6, **dadurch gekennzeichnet, dass** das Schaltventil (12) mit Hilfe eines Aktuators (13) betreibbar ist.

## Claims

1. A device (1) for driving assemblies which can be activated temporally successively, comprising
- a drive device (4),
- a first assembly (2),
- a second assembly (3), and
- a liquid friction clutch (5), **characterized in that**
- the liquid friction clutch (5) has a first clutch section (6), which is assigned to the first assembly (2), and a second clutch section (7) which is connected downstream of and in fluid connection with the first clutch section (6), and by means of which the second assembly (3) can be coupled to the drive device (4) in a positively controlled fashion and temporally after the coupling-in of the first assembly (3).

2. The device as claimed in claim 1, **characterized in that** the clutch sections (6, 7) can be regulated by means of a switching valve (12).

3. The device as claimed in claim 1 or 2, **characterized in that** the first clutch section (6) and the second clutch section (7) respectively have only one shear gap (11 and 16, respectively).

4. The device as claimed in claim 1 or 2, **characterized in that** the first clutch section (6) and the second clutch section (7) respectively have a multiplicity of shear gaps (11 and 16, respectively) which are respectively arranged in series and flow-connected to one another.

5. The device as claimed in one of claims 1 to 4, **characterized in that** the first assembly is designed as a coolant pump (2) of a cooling device of a vehicle which is provided with an internal combustion engine.

6. The device as claimed in one of claims 1 to 5, **characterized in that** the second assembly (3) is designed as a fan wheel of a cooling device of a vehicle which is provided with an internal combustion engine.

7. The device as claimed in one of claims 1 to 6, **characterized in that** the switching valve (12) can be operated by means of an actuator (13).

## Revendications

1. Dispositif (1) pour l'entraînement d'agrégats qui peuvent être activés l'un après l'autre dans le temps, comprenant
- un dispositif d'entraînement (4)
- un premier agrégat (2)
- un deuxième agrégat (3), et
- un accouplement à fluide visqueux (5)
**caractérisé en ce que**
- - l'accouplement à fluide visqueux (5) comporte une première section d'accoupplement (6) attribuée au premier agrégat et une deuxième section d'accoupplement (7) qui est disposée derrière la première section d'accoupplement (6) étant en communication avec celui-ci par un fluide et par laquelle le deuxième agrégat (3) est commandé d'une manière obligatoire par le méchanisme d'entraînement (4) et qui peut être couplée temporellement après le couplage du premier agrégat.

2. Dispositif selon la revendication 1, **caractérisé en ce que** les sections d'accoupplement (6, 7) sont réglables par un clapet de commande (12).

3. Dispositif selon la revendication 1 ou 2, **caractérisé en ce que** la première section d'accoupplement (6) et la deuxième section d'accoupplement (7) n'ont respectivement qu'un seul interstice de cisaillement (11, 16).

4. Dispositif selon la revendication 1 ou 2, **caractérisé en ce que** la première section d'accoupplement (6) et la deuxième section d'accoupplement (7) comportent chacune plusieurs interstices de cisaillement (11,16), disposés respectivement l'un après l'autre et étant en communication par écoulement de fluide.

5. Dispositif selon l'une des revendications 1 à 4, **caractérisé en ce que** le premier agrégat est formé comme pompe de refroidissement (2) d'un refroidisseur d'un véhicule automobile équipé d'un moteur à combustion.

6. Dispositif selon l'une des revendications 1 à 5, **caractérisé en ce que** le deuxième agrégat (3) est formé comme soufflante d'un refroidisseur d'un véhicule automobile équipé d'un moteur à combustion.

7. Dispositif selon l'une des revendications 1 à 6, **caractérisé en ce que** le clapet de commande (12) est utilisable à l'aide d'un actionneur (13).
